# EUROPÄISCHE PATENTSCHRIFT

(11) **EP 2 081 806 B1**
(45) Veröffentlichungstag und Bekanntmachung des Hinweises auf die Patenterteilung: **04.08.2010**
(21) Anmeldenummer: 07819070.9
(22) Anmeldetag: 17.10.2007
(51) Int. Cl.: B60T 13/74, F16H 57/08

(54) **EINTEILIGES CARRIER FÜR ELEKTRISCHER PARKBREMS-AKTUATOR MIT PLANETENGETRIEBE**
SINGLE-PART CARRIER FOR AN ELECTRIC PARKING BRAKE ACTUATOR WITH PLANETARY GEAR SET
SUPPORT D'UN SEUL TENANT POUR UN ACTIONNEUR DE FREIN DE STATIONNEMENT ÉLECTRIQUE À ENGRENAGE PLANÉTAIRE

(30) Priorität: 18.10.2006 DE 102006049229
(43) Veröffentlichungstag der Anmeldung: 29.07.2009
(73) Patentinhaber: Lucas Automotive GmbH, 56070 Koblenz (DE)
(72) Erfinder: SEUSER, Ulrich, 56566 Neuwied (DE); BUSSE, Andre, 56070 Koblenz (DE); POERTZGEN, Gregor, 56068 Koblenz (DE)
(74) Vertreter: Röthinger, Rainer
(86) Internationale Anmeldenummer: PCT/EP2007/009002
(87) Internationale Veröffentlichungsnummer: WO 2008/046605

(56) Entgegenhaltungen:
- EP-A- 0 844 417
- US-A1- 2005 215 390
- US-A1- 2007 151 816

## Beschreibung

### Gebiet der Erfindung

Die Erfindung betrifft das Gebiet der Bremsen und insbesondere der Kraftfahrzeugbremsen. Genauer gesagt betrifft die Erfindung einen elektromotorisch betätigbaren Parkbrems-Aktuator.

### Hintergrund der Erfindung

Elektromotorisch betriebene Aktuatoren für Parkbremsen (auch als Feststellbremsen bezeichnet) finden in Kraftfahrzeugen Verwendung. Vorteilhaft bei dieser Ausführungsform gegenüber Bremsen, die ausschließlich mittels Zügen oder Hydraulik betätigt werden, ist die Tatsache, dass der Fahrer keine hohe Muskelkraft aufbringen muss, um die Bremse zu betätigen. Auch lässt sich eine elektrisch betätigbare Parkbremse gut mit moderner Bordelektronik kombinieren.

Gemeinhin werden solche Parkbremsen mittels eines Aktuators betätigt, der üblicherweise einen Elektromotor mit einem nachgeschalteten Getriebe aufweist. Das Getriebe kann aus mehreren Stufen bestehen, wobei unterschiedliche Getriebetechnologien Verwendung finden können. Bekannt sind beispielsweise Getriebestufen, die als Riemengetriebe, Schneckengetriebe, Stirnradgetriebe oder Planetengetriebe ausgeführt sind. Für die Verwendung eines Planetengetriebes spricht dessen kompakte Bauform, der hohe Untersetzungsgrad pro Stufe sowie die Möglichkeit, ein hohes Drehmoment zu übertragen. Nachteilig ist hingegen, dass bedingt durch die gegenüber anderen Getriebeformen höhere Anzahl von bewegten Bauteilen pro Stufe mit gesteigerter Geräuschentwicklung gerechnet werden muss. Außerdem ist dadurch das Planetengetriebe aufwändiger in der Herstellung und verfügt potentiell über einen weniger vorteilhaften Wirkungsgrad.

Üblicherweise werden Planetenrad-Lagereinrichtungen für mit hohen Drehmomenten belasteten Planetengetriebestufen separat vom Planetenradträger gefertigt und in einem Fertigungsschritt kraftschlüssig mit dem Planetenradträger verbunden. Die allgemein bevorzugte Verbindungstechnik ist hierbei die Passung, bei der Lagereinrichtungen aus Stahl in Aussparungen eines Planetenradträgers eingepasst werden. Nachteilig ist hierbei, dass die Passungsbohrung und gegebenenfalls die korrespondierende Passfläche mit großer Präzision hergestellt werden müssen, bevor die Teile ineinander gefügt werden. Die Fertigung solcher Teile ist aufwändig und erfordert erhöhte Aufmerksamkeit bei der Qualitätskontrolle, was zu erhöhten Stückkosten führt. So eine Planetengetriebe ist z.B. in US 2005/0215390 A1 beschrieben.

Darüber hinaus sind Bremsaktuatoren erhöhten Anforderungen bezüglich der Resistenz gegen Schläge, Vibrationen, Korrosion und erhöhte Temperatur ausgesetzt.
Unter allen Betriebsbedingungen soll der mechanische Widerstand des Getriebes möglichst konstant sein, um reproduzierbare Zuspannkräfte bereitstellen zu können.

Der vorliegenden Erfindung liegt daher die Aufgabe zugrunde, einen optimierten Aktuator für eine elektrische Parkbremse bereitzustellen.

### Kurzer Abriss der Erfindung

Gemäß einem ersten Aspekt der Erfindung wird ein Aktuator für eine elektrische Parkbremse zur Verfügung gestellt, wobei der Aktuator einen Elektromotor und ein dem Elektromotor nachgeschaltetes Planetengetriebe umfasst und das Planetengetriebe wenigstens einen Planetenradträger aufweist, der eine Vielzahl von Lagereinrichtungen zur drehbaren Lagerung von Planetenrädern aufweist, wobei die Lagereinrichtungen stoffschlüssig mit dem Planetenradträger verbunden sind.

Stoffschlüssig werden hier Verbindungen genannt, deren Verbindungspartner durch atomare oder molekulare Kräfte zusammengehalten werden. Insbesondere können stoffschlüssige Verbindungen mittels Löten, Schweißen, Kleben oder Vulkanisieren hergestellt werden. Als stoffschlüssig ist auch die einteilige Ausführungsform des Planetenradträgers mit den Lagereinrichtungen anzusehen. Die Lagereinrichtungen können demgemäß einteilig mit dem Planetenradträger ausgebildet sein oder separate, aber stoffflüssig mit z. B. der Oberfläche des Planetenradträgers gekoppelte Elemente sein.

Jede Lagereinrichtung hat vorzugsweise einen Außendurchmesser von wenigstens etwa einem Drittel des größten Außendurchmessers des Planetenrades, das sie trägt. Andere, und vor allem zahlenmäßig höhere Größenverhältnisse sind möglich; das Größenverhältnis kann beispielsweise auch bei ²/₅, ½ oder darüber liegen.

Bei einer Variante ist der Durchmesser einer Lagereinrichtung größer als ihre axiale Erstreckung. Beispielsweise kann der Durchmesser 120% der axialen Erstreckung betragen.

Vorzugsweise sind die Lagereinrichtungen von zumindest annähernd zylindrischer Form. Alternativ hierzu können andere Formen verwendet werden, beispielsweise die von Kegelstümpfen. Die Lagereinrichtungen können in nicht-massiver Bauweise ausgeführt sein, wobei eine Aussparung auf der Innenseite jeder Lagereinrichtung vorgesehen sein kann, die in ihrer Form beispielsweise der äußeren Form der Lagereinrichtung entspricht. Vorzugsweise wird eine zylindrische Aussparung verwendet, deren Hochachse koaxial zur Rotationsachse des Planetenrades verläuft. Die Lagereinrichtungen könnten also als Hohlzylinder oder als Teil-Hohlzylinder ausgeführt sein.

Wenigstens eine Lagereinrichtung kann wenigstens eine Aussparung auf ihrer den Planetenrädern zugewandten Lageroberfläche aufweisen. Diese Aussparung erstreckt sich vorzugsweise in axialer Richtung und kann bei zylindrischer Grundform der Lagereinrichtung den Querschnitt eines Bogensegments aufweisen. Die Aussparung kann wenigstens teilweise mit einem Gleitmittel gefüllt sein. Vorzugsweise wird hierfür ein Fett mit niedriger Viskosität und hoher Temperaturstabilität verwendet.

Durch eine solche Aussparung kann ein vermehrtes Spiel in der Anordnung geschaffen werden, das helfen kann, gewisse Konstruktionsfehler zu kompensieren. Liegt beispielsweise eine Doppelpassung vor, die erst bei Betriebstemperatur zu Tage tritt, so sorgt das durch die Aussparung erhöhte Spiel zwischen Planetenrad und Lagereinrichtung dafür, dass erhöhte Reibkräfte nicht oder nur abgeschwächt auftreten.

Es können Abstandskörper verwendet werden, die den minimalen Abstand zwischen dem Planetenradträger und einem Planetenrad in dessen axialer Richtung bestimmen. Einer oder mehrere dieser Abstandskörper können am Planetenrad ausgebildet sein. Es können auch einer oder mehrere Abstandskörper am Planetenradträger ausgebildet werden. In beiden Fällen kann ein Gleitmittel in den entstehenden Raum zwischen dem Planetenradträger und dem Planetenrad eingebracht sein. Planetenradträger und/oder das Planetenrad können/kann aus einem Kunststoff, insbesondere aus Polyphenylsulfid gefertigt sein. Es ist möglich, den Planetenradträger im Kaltschmiedeverfahren herzustellen.

Der Planetenradträger kann eine Abtriebswelle umfassen, wobei die Abtriebswelle mittels eines Polygon-Profils drehmomentschlüssig mit dem Planetenradträger verbunden ist. Als Verbindungsarten zwischen der Abtriebswelle und dem Planetenradträger kommen alle drehmomentschlüssigen Verbindungen in Frage.

Gemäß einem weiteren Aspekt ist die Erfindung auf eine elektrische Parkbremse, die einen Aktuator wie hierin beschrieben umfasst, gerichtet. Beispielsweise können über die Abtriebswelle Reibkörper mittels eines vorzugsweise selbstsperrenden Getriebes gegen eine achsfeste Bremstrommel oder Bremsscheibe gepresst werden.

### Kurze Beschreibungen der Zeichnungen

Weitere Einzelheiten und Vorteile der Erfindung ergeben sich aus der nachfolgenden Beschreibung einer bevorzugten Ausführungsform sowie aus den Figuren. Es zeigen:
- Fig. 1:: eine Ausführungsform eines Bremsaktuators mit Elektromotor, Riemen- getriebe und mehrstufigem Planetengetriebe;
- Fig. 2:: eine Explosionszeichnung einer ersten Ausführungsform des Planeten- getriebes aus Fig. 1;
- Fig. 3:: eine perspektivische Darstellung eines Planetenradträgers zum Einsatz bei einem Planetengetriebe eines erfindungsgemäßen Aktuators einer elektrische Parkbremse;
- Fig. 4:: eine Draufsicht auf den Planetenradträger gemäß Fig. 3 mit vier Plane- tenrädern zum Einsatz bei einem Planetengetriebe eines erfindungsge- mäßen Aktuators;
- Fig. 5:: eine Draufsicht eines Planetenradträgers mit einem Planetenrad zum Einsatz bei einem Planetengetriebe eines erfindungsgemäßen Aktua- tors;
- Fig. 6:: eine Detaildarstellung eines Schnittes entlang der Linie A-A in Fig. 5;
- Fig. 7:: eine perspektivische Darstellung des Planetenradträgers gemäß Fig. 5;
- Fig. 8:: eine Explosionszeichnung einer weiteren Ausführungsform des Plane- tengetriebes aus Fig. 1; und
- Fig. 9:: eine perspektivische Darstellung eines Planetenrades 260 gemäß Fig. 8.

### Beschreibung eines bevorzugten Ausführungsform

Im Folgenden wird eine Ausführungsform eines elektrischen Parkbrems-Aktuators mit einem Planetengetriebe beschrieben. Der beschriebene Bremsaktuator gibt ein Drehmoment ab, das zur Betätigung einer Fahrzeugbremse (nicht dargestellt) im Parkbremsbetrieb genutzt werden kann.

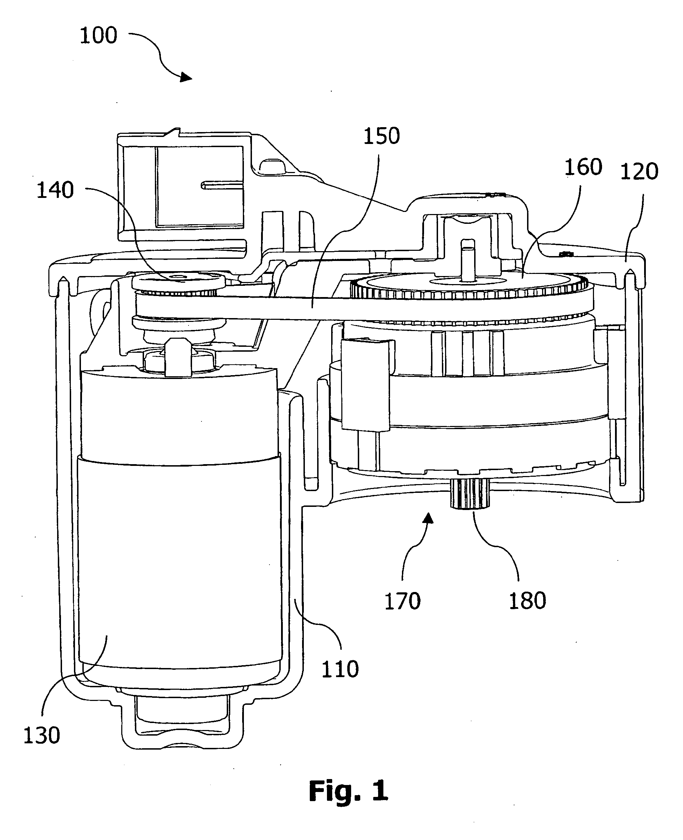

Fig. 1 zeigt einen elektrischen Parkbrems-Aktuator 100, der ein Gehäuse 110 mit einem Gehäusedeckel 120 umfasst. Ein im Gehäuse 110 untergebrachter Elektromotor 130 wird im Bedarfsfall elektrisch angesteuert und treibt ein erstes Zahnriemenrad 140 an, welches über einen Zahnriemen 150 mit einem zweiten Zahnriemenrad 160 gekoppelt ist. Anstelle des Riemengetriebes 140, 150, 160 kann auch ein anderes Getriebe, beispielsweise ein Stirnradgetriebe, ein Schraubenradgetriebe oder ein Planetengetriebe verwendet werden. Dem Riemengetriebe 140, 150, 160 ist ein Planetengetriebe 170 nachgeschaltet. Das Planetengetriebe 170 könnte auch ohne Verwendung des Riemengetriebes 140, 150, 160 drehmomentschlüssig mit dem Motor 130 verbunden sein.

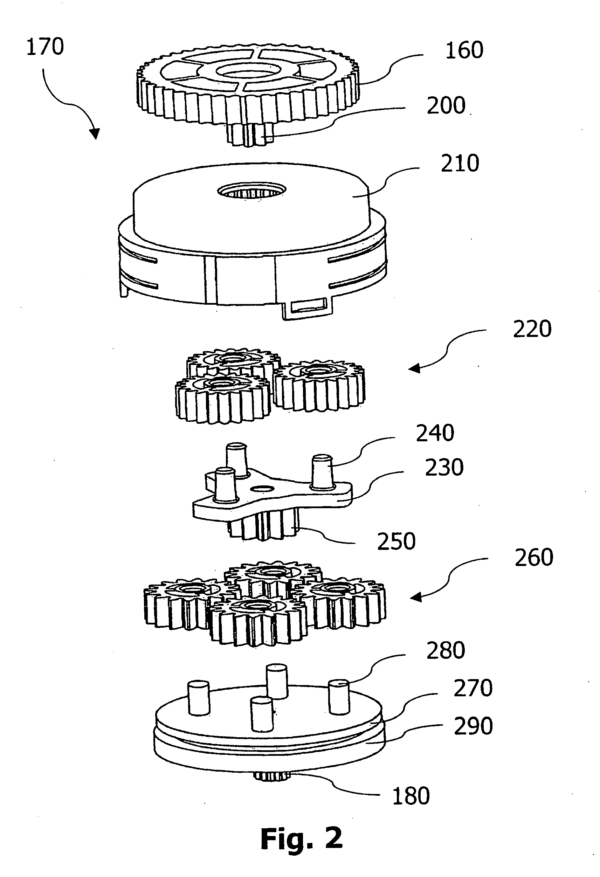

Bei der hier gezeigten Ausführungsform des Planetengetriebes 170 handelt es sich um eine zweistufige Ausführungsform (vgl. Fig. 2). Am unteren Ende des Planetengetriebes 170 befindet sich die Abtriebswelle 180, die ihr Drehmoment an einen Zuspann- oder Krafthaltemechanismus der Parkbremse abgeben kann.

Fig. 2 zeigt eine Explosionsdarstellung des zweistufigen Planetengetriebes 170. Der Antrieb des Getriebes 170 erfolgt über das Zahnriemenrad 160, welches in der beschriebenen Weise von dem Elektromotor 130 angetrieben wird. Das Zahnriemenrad 160 verfügt über ein mittig angeordnetes erstes Sonnenrad 200, welches in ein Hohlrad 210 von oben eintaucht. Das Hohlrad 210 trägt in der gezeigten Ausführungsform zwei Innenverzahnungen, die nur teilweise zu erkennen sind. Je nach Verzahnung der unten beschriebenen Planetenräder können diese Innenverzahnungen von gleicher oder unterschiedlicher Teilung und Breite sein.

Drei Planetenräder 220 laufen in der oberen Verzahnung des Hohlrades 210. Jedes Planetenrad 220 befindet sich gleichzeitig mit dem ersten Sonnenrad 200 und einer Innenverzahnung des Hohlrades 210 im Eingriff. Gelagert werden die Planetenräder 220 auf von einem ersten Planetenradträger 230 sich in Fig. 2 nach oben erstreckenden Lagereinrichtungen 240. Bei der vorliegenden Ausführungsform sind nur die Lagereinrichtungen einer zweiten Stufe des Planetengetriebes 170 in erfindungsgemäßer Weise ausgebildet; die Lagereinrichtungen 240 der Planetenräder 220 könnten dem Stand der Technik entsprechen. Es können jedoch auch die Lagereinrichtungen 240 in der erfindungsgemäßen Weise auf dem ersten Planetenradträger 230 stoffflüssig angebracht oder einteilig mit ihm ausgebildet sein.

Der erste Planetenradträger 230 ist drehmomentschlüssig mit einem Sonnenrad 250 verbunden. Eine stoffschlüssige Verbindung der beiden Elemente ist ebenso möglich wie eine Verbindung mittels Einpressens, Vernietens, Verschraubens, Aufschrumpfens oder einer anderen Verbindungstechnik.

Das Sonnenrad 250 des ersten Planetenradträgers 230 befindet sich in Eingriff mit einem Satz von vier weiteren Planetenrädern 260. Bei der gezeigten Ausführungsform besitzen die Planetenräder 260 und das Sonnenrad 250 die gleiche Verzahnung, die verschieden ist von der der Planetenräder 220 und des Sonnenrads 200. Dementsprechend weist das Hohlrad 210 zwei im Bild nicht ersichtliche unterschiedliche Innenverzahnungen auf, in welche die Planetenräder 220 und die Planetenräder 260 eingreifen. Die Planetenräder 260 kämmen dabei mit der unteren Innenverzahnung des Hohlrades 210, die Planetenräder 220 hingegen mit der oberen Innenverzahnung.

Das dargestellte zweistufige Planetengetriebe untersetzt die am Zahnriemenrad 160 eingebrachte Drehgeschwindigkeit in zwei Stufen. Die erste Stufe besteht aus dem ersten Sonnenrad 200, den Planetenrädern 220, dem oberen Teil des Hohlrades 210 und dem Planetenradträger 230 mit den Lagereinrichtungen 240. Die zweite Stufe besteht aus dem zweiten Sonnenrad 250, den Planetenrädern 260, dem unteren Teil des Hohlrades 210 sowie dem zweiten Planetenradträger 270 mit zylindrischen Lagereinrichtungen 280 für die Planetenträger 260. Der Planetenträger 270 und die Lagereinrichtungen 280 sind einstückig ausgebildet.

Da im Zuge der Drehzahluntersetzung beider Planetengetriebestufen jeweils auch eine Drehmomentübersetzung stattfindet, ist das auf die Planetenräder 260 wirkende Drehmoment größer als jenes, das auf die Planetenräder 220 wirkt. Aus diesem Grund sieht eine bevorzugte Ausführungsform vor, die Verzahnung der Planetenräder 260 gröber als die der Planetenräder 220 auszulegen. Eine gleiche oder eine feinere Verzahnung der Planetenräder 260 ist jedoch auch möglich. In jedem Fall müssen sich die Verzahnungen der im gegenseitigen Eingriff befindlichen Sonnen-, Planeten- und Hohlräder entsprechen.

Bei der gezeigten Ausführungsform bildet eine untere Abdeckung 290 zusammen mit dem Hohlrad 210 ein Gehäuse des zweistufigen Planetengetriebes. Die Abgabe des Drehmoments erfolgt über die Abtriebswelle 180, die koaxial und drehmomentschlüssig mit dem unteren Planetenradträger 270 verbunden ist.

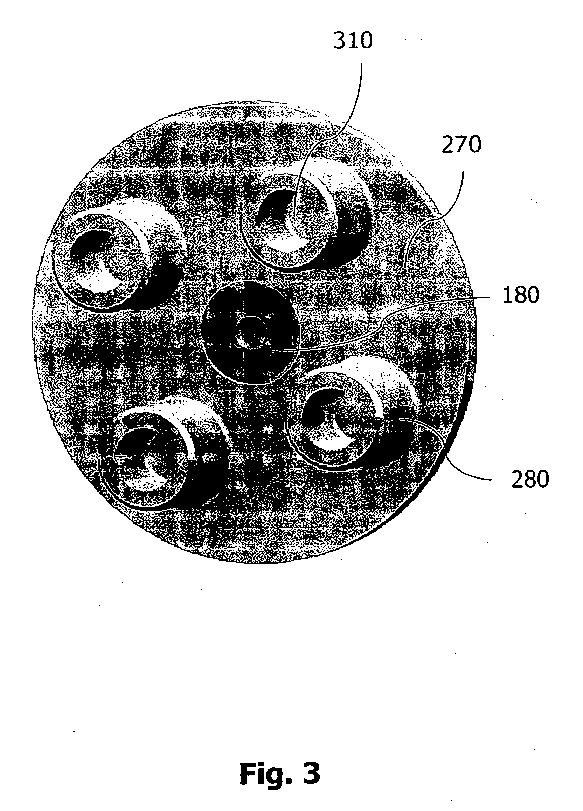

Fig. 3 zeigt eine weitere Ausführungsform des zweiten Planetenradträgers 270 mit den Lagereinrichtungen 280. Im Unterschied zu Fig. 2 verfügt der untere Planetenradträger 270 über zylindrische Lagereinrichtungen 280 größeren Durchmessers, die zusätzlich koaxiale Aushöhlungen 310 aufweisen. Jede der Aushöhlungen 310 kann auch eine andere Form aufweisen, insbesondere kann sie abweichend von einer zylindrischen Form eine beliebig geformten Grundfläche aufweisen.

Bei der vorliegenden Ausführungsform ist der zweite Planetenradträger mit einer kreisrunden Grundfläche ausgebildet. Es können jedoch auch andere Grundflächen verwendet werden, beispielsweise quadratische, polygonale oder sternförmige (vgl. oberer Planetenradträger 230 in Fig. 2).

Die Lagereinrichtungen 280 sind auf der Oberfläche des in Fig. 3 gezeigten Planetenradträgers 270 stoffschlüssig angebracht. Bei der gezeigten Ausführungsform werden vier Lagereinrichtungen 280 für gleich viele Planetenräder 260 verwendet. Es kann jedoch auch eine größere oder kleinere Anzahl Planetenräder 260 und Lagereinrichtungen 280 verwendet werden. In der Praxis bewährt hat sich eine Anzahl von drei bis vier Planetenrädern 260 und Lagereinrichtungen 280. Die Mittelpunkte der Lagereinrichtungen 280 befinden sich vorzugsweise in gleichen Abständen auf einer Kreislinie, die den gleichen Mittelpunkt hat wie die Abtriebswelle 180. Alle Planetenräder 260 weisen gleiche Abmessungen und eine einheitliche Verzahnung auf.

Der Außendurchmesser der Lagereinrichtungen 280 ist gemäß Fig. 3 vorzugsweise größer als ihre axiale Erstreckung. Je nach Beschaffenheit der verwendeten Materialien und den Beanspruchungen während des Betriebes können jedoch die Durchmesser der Lagereinrichtungen 280 auch kleiner als ihre axiale Erstreckung sein. Bei dieser Ausführungsform weisen die Lagereinrichtungen 280 einen Durchmesser von mehr als einem Drittel des größten Außendurchmessers der Planetenräder 260 auf.

In der Praxis hat es sich bewährt, die Außendurchmesser der Lagereinrichtungen 280 relativ groß im Vergleich zu den Durchmessern der Planetenräder 260 zu wählen. Auf diese Weise wird erreicht, dass die Reib- und Scherkräfte an den Lagereinrichtungen 280 über eine größere Fläche verteilt werden, wodurch die Materialbeanspruchung und die Geräuschentwicklung sinkt. Der Einsatz von Kunststoff für die Lagereinrichtungen 280 und/oder die Planetenräder 260 wird dadurch wesentlich erleichtert. Insbesondere sieht die vorliegende Ausführungsform vor, die Lagereinrichtungen 280 und den unteren Planetenradträger 260 im Kaltschmiedeverfahren herzustellen. Diese Produktionsweise erlaubt eine kostengünstige Produktion einer ausreichend belastbaren Ausführungsform der Erfindung.

Die verbleibende Materialstärke zwischen den Zähnen der Planetenräder 260 und ihren Lagerflächen sollte nicht zu gering gewählt werden, damit genügend Material für eine standfeste Kraft- und Drehmomentübertragung vorhanden ist. Eventuell ist eine geringe Materialstärke in radialer Richtung durch eine größere Ausdehnung der Planetenräder 260 in axialer Richtung zu kompensieren. Fällt die genannte Materialstärke zu gering aus, so ist mit einer Verformung der Zahnräder beim Betrieb des Getriebes und daraus resultierender Materialermüdung zu rechnen.

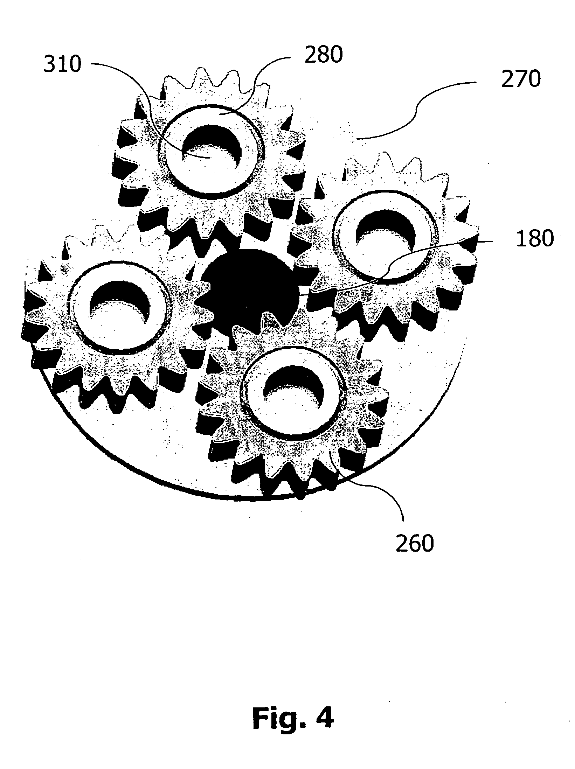

Fig. 4 zeigt den in Fig. 3 dargestellten Planetenradträger 270 mit zusätzlich auf den Lagereinrichtungen 280 montierten Planetenrädern 260 aus einer anderen Perspektive. In der Mitte des Planetenradträgers 270 ist die Abtriebswelle 180 gut erkennbar.

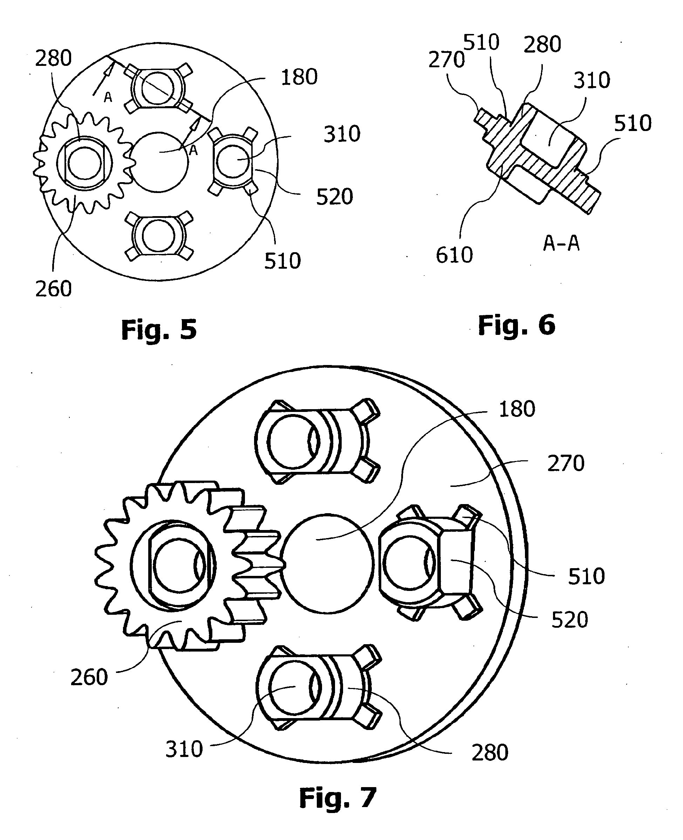

Fig. 5 zeigt eine Draufsicht auf einen weiteren Planetenradträger 270 mit Lagereinrichtungen 280 und einem montierten Planetenrad 260, der ebenfalls für die zweite Stufe des Planetengetriebes gemäß Fig. 2 verwendet werden kann. In der Mitte des Planetenradträgers 270 befindet sich die Abtriebswelle 180. Bei dieser Ausführungsform weist jede der Lagereinrichtungen 280 an ihrer der Planetenradträger 270 abgewandten Stirnseite eine Fase oder Abflachung auf. Diese Fase kann die Montage der Planetenräder 260 erleichtern.

Wie außerdem in Fig. 5 erkennbar ist, verfügt jede der Lagereinrichtungen 280 über mehrere sich axial erstreckende Aussparungen 520. Diese Aussparungen 520 sind so geformt, dass sie einen konstanten Querschnitt entlang der Achsen der Lagereinrichtungen 280 aufweisen. Dieser Querschnitt besitzt die Form eines Kreisbogens mit Sehne, wobei der Kreisbogen der Lauffläche der Lagereinrichtungen 280 folgt. Anschaulich ausgedrückt entstehen die in Fig. 5 dargestellten Beispiele von Aussparungen 520 der Lagereinrichtungen 280 aus kreiszylindrischen Lagereinrichtungen 280, von denen jeweils durch einen Schnitt parallel zu ihrer Hochachse (und beabstandet von ihrem Mittelpunkt) ein Teil entfernt wird.

Andere Ausführungen der Aussparungen 520 sind denkbar, beispielsweise ist es nicht unbedingt erforderlich, dass alle Aussparungen 520 einer Lagereinrichtung 280 die gleiche Form aufweisen oder dass sie entlang der Hochachsen der Lagereinrichtungen 280 konstanten Querschnitt besitzen. Auch die Anzahl der Aussparungen 520 pro Lagereinrichtung 280 kann variiert werden. Bei der Ausführungsform gemäß Fig. 5 werden pro Lagereinrichtung 280 zwei Aussparungen 520 verwendet, welche einander gegenüberliegend angebracht sind. Es können aber auch mehr oder weniger Aussparungen 520 pro Lagereinrichtung 280 vorgesehen werden.

Durch die Verwendung von Aussparungen 520 wird die in Kontakt mit den Planetenrädern 260 stehende Oberfläche der Lagereinrichtungen 280 minimiert, was eine Verringerung der Gleitreibung bewirken kann. Die Aussparungen 520 können darüber hinaus verwendet werden, um die entstehenden Räume zwischen den Laufflächen der Planetenräder 260 und den Lagereinrichtungen 280 mit einem Gleitmittel, beispielsweise einem Lagerfett, zu füllen. Die Aussparungen 520 können so als Gleitmittelreservoir dienen. Die Orientierung der Aussparungen 520 in Bezug auf den Planetenradträger 270 ergibt sich vorzugsweise durch diejenigen Anteile der Laufoberflächen der Lagerungseinrichtungen 280, die während des Betriebs des Planetengetriebes 170 den geringsten Belastungen ausgesetzt sind. Diese Stellen können beispielsweise nach anhaltender Belastung durch Analyse des Verschleißbildes der Lagereinrichtungen 280 ohne Aussparungen bestimmt werden.

Weiterhin sind jeder der Lagereinrichtungen 280 in Fig. 5 mehrere Abstandskörper 510 zugeordnet, die den Abstand der Planetenräder 260 vom Planetenradträger 270 bestimmen. Anzahl, Form, Lage und Orientierung der Abstandskörper 510 sind dabei variabel. Die Abstandskörper verringern die Kontaktoberfläche zwischen dem Planetenrad 260 und dem Planetenradträger 270 und können so eine Verringerung der Reibung im Betrieb bewirken. Die Abstandskörper 510 können am Planetenradträger 270 und/oder an den dem Planetenradträger 270 zugewandten Wangen der Planetenräder 260 ausgebildet sein. Eine einstückige Ausbildung der Abstandskörper 510 mit dem Planetenradträger 270 (vgl. Fig. 6) oder dem Planetenrad 260 ist ebenso möglich wie eine separate Ausbildung mit anschließender Montage. Bei der Ausführungsform von Fig. 5 werden vier Abstandskörper 510 verwendet. Alternativ oder zusätzlich zu den dargestellten, am Planetenradträger 270 angebrachten Abstandskörpern 510 können Abstandskörper vorgesehen sein, die an den Planetenrädern 260 angebracht sind. Bei der gleichzeitigen Verwendung beider Optionen muss darauf geachtet werden, dass die Abstandskörper 510 der Planetenräder 260 und die des Planetenradträgers 270 z.B. voneinander disjunkte Kreisringe um die Achse der Lagereinrichtungen 280 abdecken, um ein gegenseitiges Verhaken zu vermeiden.

In dem Raum, der sich zwischen den Planetenrädern 260, den Abstandskörpern 510 und dem Planetenradträger 270 ergibt, kann ein Gleitmittel eingebracht werden. Eine bevorzugte Ausführungsform sieht vor, die sich auf diese Weise ergebenden Gleitmittelreservoire mit den durch die Aussparungen 520 der Lagereinrichtungen 280 gebildeten Gleitmittelreservoiren zu verbinden, so dass das eingebrachte Gleitmittel sich vom einen in das andere Reservoir bewegen kann.

Es hat sich gezeigt, dass bei Einsatz eines niedrig viskosen Gleitmittels dieses unter hohen Getriebebelastungen zuerst an den Stellen flüssiger wird, wo die Temperatur aufgrund der Belastung am höchsten ist. Dadurch werden die am stärksten belasteten Stellen der Planetenräder 260 und der Lagereinrichtungen 280 automatisch besonders gut mit Gleitmittel versehen. Dieser Effekt wird unterstützt, wenn die genannten Reservoire miteinander verbunden sind. Eine getrennte Ausführungsform der Reservoire ist aber ebenfalls möglich.

Fig. 6 zeigt den Schnitt entlang der Schnittlinie A-A aus Fig. 5. Gut zu erkennen ist die einstückige Ausführung der Lagereinrichtungen 280 und des Planetenradträgers 270. Ebenfalls zu erkennen ist die einstückige Ausführungsform der Abstandskörper 510 und der Planetenradträger 270. In der dargestellten Ausführungsform haben die Lagereinrichtungen 280 die Form von Hohlzylindern. Auf der den Lagereinrichtungen 280 abgewandten Seite des Planetenradträgers 270 befindet sich eine Wulst 610. Die Wulst 610 kann die Stabilität des Planetenradträgers 270 verbessern.

Wie bereits oben erwähnt, sind die Lagereinrichtungen 280 mit dem Planetenradträger 270 stoffschlüssig verbunden. Eine andere als die in Fig. 6 dargestellte bevorzugte Ausführungsform sieht vor, zylindrische Lagereinrichtungen 280 zu wählen, die stumpf aber im Stofffluss mit der Oberfläche des Planetenradträgers 270 verbunden werden. Die Lagereinrichtungen 280 erstrecken sich vorzugsweise nicht in eine in dem Planetenradträger 270 eingebrachte Aussparung hinein. Als Fügetechniken zwischen den Lagereinrichtungen 280 und den Planetenrad 270 kommen alle stoffschlüssigen Verbindungstechniken in Frage, beispielsweise Schweißen, insbesondere Reibschweißen, Hart- und Weichlöten, Kleben und Vulkanisieren.

Sowohl der Planetenradträger 270 (eventuell mit einteilig ausgebildeten Lagereinrichtungen 280) als auch die Planetenräder 260 können aus einem Kunststoff, insbesondere aus Polyphenylsulfid gefertigt sein. Ein mögliches Herstellungsverfahren für den Planetenradträger 270 (mit oder ohne die Lagereinrichtungen 280 und die Abstandskörper 510) umfasst das Kaltschmieden.

Fig. 7 zeigt die Konstellation aus Fig. 5 in einer perspektivischen Darstellung. Gut erkennbar sind der Planetenradträger 270 mit vier Lagereinrichtungen 280 und vier Abstandskörpern 510 pro Lagereinrichtung 280. Auf einer der Lagereinrichtungen 280 ist ein Planetenrad 260 montiert.

Jedes der Planetenräder 260 oder 220 kann durch eine Vielzahl von koaxialen Planetenradscheiben mit gleichen Innen- und Außendurchmessern gebildet werden. In gleicher Weise kann das Hohlrad 210 aus mehreren axialen Elementen mit entsprechenden Innenverzahnungen gebildet werden.

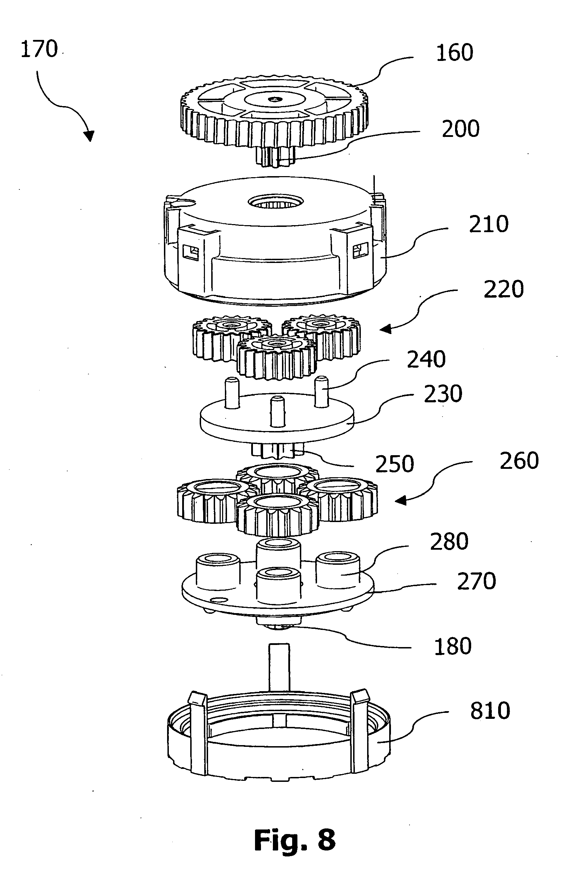

Fig. 8 zeigt eine Explosionszeichnung einer weiteren Ausführungsform des Planetengetriebes 170. Im Wesentlichen entsprechen die dargestellten Elemente den in Fig. 2 dargestellten Elementen und tragen gleiche Bezugszeichen. Im Folgenden werden daher lediglich die Unterschiede der in Fig. 8 dargestellten Ausführungsform im Vergleich zu der in Fig. 2 dargestellten Ausführungsform erläutert.

Ein Abschlussring 810 ersetzt die untere Abdeckung 290 aus Fig. 2 und bildet zusammen mit dem Hohlrad 210 ein Gehäuse des zweistufigen Planetengetriebes 170. Die Verbindung des Abschlussrings 810 mit dem Hohlrad 210 erfolgt durch drei vom Abschlussring ausgehende, sich in axialer Richtung des Planetengetriebes 170 erstreckende Zungen, die in korrespondierende Aussparungen des Hohlrades 210 einrasten und mit ihnen eine lösbare Schnappverbindung eingehen. Der Abschlussring 810 verhindert ein Herausfallen des Planetenradträgers 270 nach unten, weist jedoch keine vollständige Abdeckung auf, so dass der untere Planetenradträger 270 bei zusammengebautem Planetengetriebe 170 im Bereich der Abtriebswelle 180 teilweise offen liegt. Eine Abdeckung des Planetenradträgers 270 kann auf eine beliebige, dem Fachmann bekannte Weise in den Abschlussring 810 von innen oder außen eingelegt und/oder mit ihm verbunden werden. Der untere Planetenradträger 270 weist an seiner Oberseite vier Lagereinrichtungen auf, die wie in Fig. 3 dargestellt, als Hohlzylinder mit relativ großen Außendurchmessern ausgeformt sind. Die auf den Lagereinrichtungen 280 gelagerten Planetenräder 260 weisen an ihren Stirnseiten abgeschrägte Verzahnungen auf.

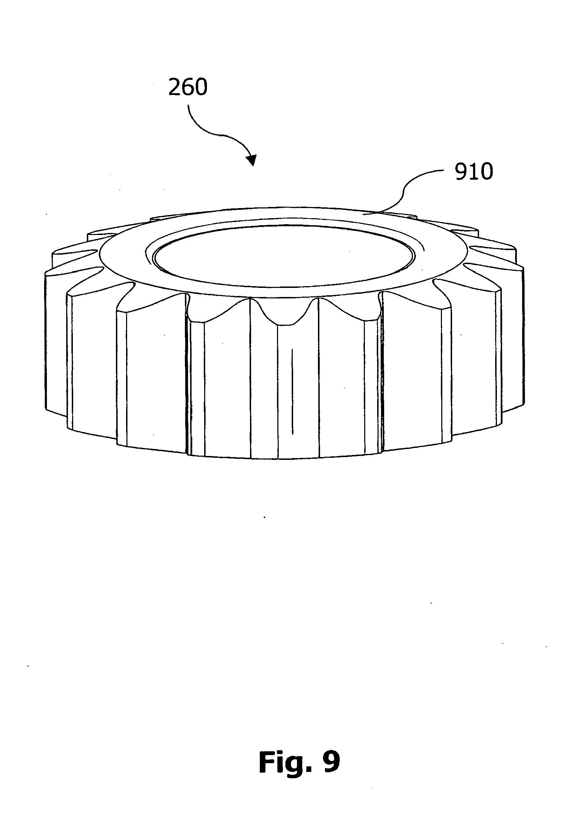

Fig. 9 zeigt eines der Planetenräder 260 aus Fig. 8 in einer perspektivischen Detaildarstellung. Die Abschrägung der Verzahnung findet sich sowohl auf der Oberseite als auch auf der Unterseite des Planetenrades 260, so dass auf eine gesonderte Darstellung und Beschreibung der Unterseite verzichtet werden kann. Durch die abgeschrägte Verzahnung des Planetenrades 260 wird zum Planetenradträger 270 hin ein sich axial erstreckender umlaufender Rand 910 ausgebildet, über den das Planetenrad am Planetenradträger 270 anliegt. Der umlaufende Rand 910 ist eine Ausgestaltung der oben bezüglich Fig. 5 beschriebenen Abstandskörper 510, wobei der Abstandskörper 910 an der dem Planetenradträger 270 zugewandten Wange des Planetenrades 260 und einstückig mit diesem ausgebildet ist. Durch die beschriebene Abschrägung der Verzahnung des Planetenrades 260 wird die Fläche, auf der das Planetenrad 260 mit dem Planetenradträger 270 in Kontakt steht, signifikant verkleinert. Dadurch können die Reibungsverluste zwischen dem Planetenrad 260 und dem Planetenradträger 270 reduziert werden, so dass der Wirkungsgrad des Planetengetriebes 170, und damit auch der Gesamtwirkungsgrad des Parkbrems-Aktuators 100, erhöht wird.

Wie dem Fachmann bekannt ist, können die Planetenräder 260 außer mittels des oben erwähnten Kaltschmiedeverfahrens beispielsweise auch durch Sintern hergestellt werden, wodurch sich Kostenvorteile ergeben können. Im Zusammenhang mit Sintern erweist sich die stirnseitig abgeschrägte Verzahnung des Planetenrades 260 nach den Fign. 8 und 9 als vorteilhaft, weil das beim Sintern abschließend erforderliche Entformen des Planetenrades 260 einfacher durchführbar ist.

## Patentansprüche

1. Aktuator (100) für eine elektrische Parkbremse, wobei der Aktuator (100) einen Elektromotor (130) und ein dem Elektromotor (130) nachgeschaltetes Planetengetriebe (170) umfasst und das Planetengetriebe (170) wenigstens einen Planetenradträger (270) aufweist, der eine Vielzahl von Lagereinrichtungen (280) zur drehbaren Lagerung von Planetenrädern (260) aufweist, **dadurch gekennzeichnet, dass** die Lagereinrichtungen (280) stoffschlüssig mit dem Planetenradträger (270) verbunden sind.

2. Aktuator (100) gemäß Anspruch 1, **dadurch gekennzeichnet, dass** die Lagereinrichtungen (280) einteilig mit dem Planetenradträger (270) ausgebildet sind.

3. Aktuator (100) gemäß Anspruch 1, **dadurch gekennzeichnet, dass** die Lagereinrichtungen (280) separate, stoffschlüssig mit dem Planetenradträger gekoppelte Elemente sind.

4. Aktuator (100) gemäß einem der vorhergehenden Ansprüche, **dadurch gekennzeichnet, dass** die Lagereinrichtungen (280) einen Durchmesser von wenigstens einem Drittel des größten Außendurchmessers der Planetenräder (260) aufweisen.

5. Aktuator (100) gemäß einem der vorhergehenden Ansprüche, **dadurch gekennzeichnet, dass** die Lagereinrichtungen (280) einen Durchmesser aufweisen, der größer als ihre axiale Erstreckung ist.

6. Aktuator (100) gemäß einem der vorhergehenden Ansprüche, **dadurch gekennzeichnet, dass** die Lagereinrichtungen (280) eine im Wesentlichen zylindrische, insbesondere hohlzylindrische, Form aufweisen.

7. Aktuator (100) gemäß einem der vorhergehenden Ansprüche, **dadurch gekennzeichnet, dass** die Lagereinrichtungen (280) jeweils wenigstens eine Aussparung (520) auf ihrer den Planetenrädern (260) zugewandten Lageroberfläche aufweisen.

8. Aktuator (100) gemäß Anspruch 7, **dadurch gekennzeichnet, dass** die Aussparung (520) wenigstens teilweise mit einem Gleitmittel gefüllt ist.

9. Aktuator (100) gemäß Anspruch 7 oder 8, **dadurch gekennzeichnet, dass** wenigstens eine der Aussparungen (520) in axialer Richtung der Lagereinrichtung verläuft.

10. Aktuator (100) gemäß einem der vorhergehenden Ansprüche, wobei wenigstens eine der Lagereinrichtungen ein Planetenrad (260) drehbar lagert, **dadurch gekennzeichnet, dass** der minimale Abstand zwischen dem Planetenradträger (270) und dem Planetenrad (260) in dessen axialer Richtung durch wenigstens einen Abstandskörper (510, 910) bestimmt ist.

11. Aktuator (100) gemäß Anspruch 10, **dadurch gekennzeichnet, dass** wenigstens einer der Abstandskörper (910) am Planetenrad (260) oder am Planetenradträger (270) ausgebildet ist.

12. Aktuator (100) gemäß einem der Ansprüche 9 bis 11, **dadurch gekennzeichnet, dass** ein Gleitmittel in den Raum zwischen dem Planetenradträger (270) und wenigstens einem der Planetenräder (260) eingebracht ist.

13. Aktuator (100) gemäß einem der vorhergehenden Ansprüche, **dadurch gekennzeichnet, dass** der Planetenradträger (270) und/oder wenigstens ein Planetenrad (260) aus einem Kunststoff, insbesondere aus Polyphenylsulfid, gefertigt ist.

14. Aktuator (100) gemäß einem der vorhergehenden Ansprüche, **dadurch gekennzeichnet, dass** der Planetenradträger (270) eine Abtriebswelle (180) umfasst, wobei die Abtriebswelle (180) mittels eines Polygon-Profils drehmomentschlüssig mit dem Planetenradträger (270) verbunden ist.

15. Elektrische Parkbremse mit einem Aktuator (100) gemäß einem der vorhergehenden Ansprüche.

## Claims

1. An actuator (100) for an electrical parking brake, the actuator (100) comprising an electric motor (130) and a planetary gear set (170) which is connected downstream from the electric motor (130), and the planetary gear set (170) having at least one planet carrier (270), which has multiple bearing devices (280) for rotatable bearing of planet wheels (260), **characterized in that** the bearing devices (280) are joined substance-to-substance to the planet carrier (270).

2. The actuator (100) according to Claim 1, **characterized in that** the bearing devices (280) are formed in one part with the planet carrier (270).

3. The actuator (100) according to Claim 1, **characterized in that** the bearing devices (280) are separate elements which are joined substance-to-substance to the planet carrier.

4. The actuator (100) according to one of the preceding claims, **characterized in that** the bearing devices (280) have a diameter of at least one third of the greatest outer diameter of the planet wheels (260).

5. The actuator (100) according to one of the preceding claims, **characterized in that** the bearing devices (280) have a diameter which is greater than their axial extent.

6. The actuator (100) according to one of the preceding claims, **characterized in that** the bearing devices (280) are of essentially cylindrical, in particular hollow cylindrical, form.

7. The actuator (100) according to one of the preceding claims, **characterized in that** the bearing devices (280) each have at least one recess (520) on their bearing surfaces facing the planet wheels (260).

8. The actuator (100) according to Claim 7, **characterized in that** the recess (520) is at least partly filled with a lubricant.

9. The actuator (100) according to Claim 7 or 8, **characterized in that** at least one of the recesses (520) runs in the axial direction of the bearing device.

10. The actuator (100) according to one of the preceding claims, wherein at least one of the bearing devices carries a planet wheel (260) rotatably, **characterized in that** the minimum distance between the planet carrier (270) and the planet wheel (260) in its axial direction is determined by at least one spacer body (510, 910).

11. The actuator (100) according to Claim 10, **characterized in that** at least one of the spacer bodies (910) is formed on the planet wheel (260) or on the planet carrier (270).

12. The actuator (100) according to one of Claims 9 to 11, **characterized in that** a lubricant is inserted into the space between the planet carrier (270) and at least one of the planet wheels (260).

13. The actuator (100) according to one of the preceding claims, **characterized in that** the planet carrier (270) and/or at least one planet wheel (260) is manufactured from a plastic, in particular polyphenyl sulfhide.

14. The actuator (100) according to one of the preceding claims, **characterized in that** the planet carrier (270) includes a driven shaft (180), which is joined to the planet carrier (270) in a torque-locked manner by means of a polygon profile.

15. An electrical parking brake with an actuator (100) according to one of the preceding claims.

## Revendications

1. Actionneur (100) pour frein de stationnement électrique, l'actionneur (100) comprenant un moteur électrique (130) et un engrenage planétaire (170) monté en aval du moteur électrique (130), et l'engrenage planétaire (170) présentant au moins un support de roues planétaires (270) comportant un grand nombre de dispositifs paliers pour le logement mobile en rotation de roues planétaires (260), **caractérisé en ce que** les dispositifs paliers (280) sont reliés par liaison de matière au support de roues planétaires (270).

2. Actionneur (100) selon la revendication 1, **caractérisé en ce que** les dispositifs paliers (280) sont réalisés d'un seul tenant avec le support de roues planétaires (270).

3. Actionneur (100) selon la revendication 1, **caractérisé en ce que** les dispositifs paliers (280) sont des éléments distincts accouplés par liaison de matière au support de roues planétaires.

4. Actionneur (100) selon l'une des revendications précédentes, **caractérisé en ce que** les dispositifs paliers (280) présentent un diamètre égal au moins au tiers du plus grand diamètre extérieur des roues planétaires (260).

5. Actionneur (100) selon l'une des revendications précédentes, **caractérisé en ce que** les dispositifs paliers(280) présentent un diamètre qui est supérieur à leur étendue axiale.

6. Actionneur (100) selon l'une des revendications précédentes, **caractérisé en ce que** les dispositifs paliers (280) présentent une forme pour l'essentiel cylindrique, plus particulièrement une forme cylindrique creuse.

7. Actionneur (100) selon l'une des revendications précédentes, **caractérisé en ce que** les dispositifs paliers (280) présentent respectivement au moins une échancrure (520) sur leur surface tournée vers les roues planétaires (280).

8. Actionneur (100) selon la revendication 7, **caractérisé en ce que** l'échancrure (520) est remplie au moins partiellement d'un lubrifiant.

9. Système selon la revendication 7 ou 8, **caractérisé en ce qu'**au moins une des échancrures (520) s'étend dans le sens axial du dispositif palier.

10. Actionneur (100) selon l'une des revendications précédentes, au moins un des dispositifs paliers portant une roue planétaire (260) montée mobile en rotation, **caractérisé en ce que** la distance minimum entre le support de roues planétaires (270) et la roue planétaire (260) est déterminée dans son sens axial par au moins un élément écarteur (510, 910).

11. Actionneur (100) selon la revendication 10, **caractérisé en ce qu'**au moins un des éléments écarteurs (910) est réalisé sur la roue planétaire (260) ou sur le support de roues planétaires (270).

12. Actionneur (100) selon l'une des revendications 9 à 11, **caractérisé en ce qu'**un lubrifiant est placé dans l'espace compris entre le support de roues planétaires (270) et au moins une des roues planétaires (260).

13. Actionneur (100) selon l'une des revendications précédentes, **caractérisé en ce que** le support de roues planétaires (270) et/ou au moins une roue planétaire (260) sont fabriqués à partir d'une matière synthétique, plus particulièrement à partir de sulfure de polyphényle.

14. Actionneur (100) selon l'une des revendications précédentes, **caractérisé en ce que** le support de roues planétaires (270) comprend un arbre d'entraînement (180), cet arbre d'entraînement (180) étant relié en solidarité de rotation au support de roues planétaires (270) par l'intermédiaire d'un profilé polygonal.

15. Frein de stationnement électrique pourvu d'un actionneur (100) selon l'une des revendications précédentes.
